# EUROPEAN PATENT APPLICATION

(11) **EP 1 894 899 A1**
(43) Date of publication of application: **05.03.2008**
(21) Application number: 06300912.0
(22) Date of filing: 31.08.2006
(51) Int. Cl.: C03C 3/062, C03C 3/083, C03C 3/093, C03C 4/02, C03B 23/207

(54) **Glass articles and process for making the same**

(71) Applicant: Corning Incorporated, Corning, NY 14831 (US)
(72) Inventor: Brocheton, Yves, 77210 Samoreau (FR)
(74) Representative: Le Roux, Martine

(57) **Abstract**

The present application discloses novel glass articles comprising a soda-lime part and a borosilicate glass part fused to the soda-lime glass part, and process for making such articles. The borosilicate glass has a CTE in the range of 75-87×10⁻⁷/°C between about 0-300°C, and a softening point of between 550-650°C. The glass can be colored to differing colorations. The glass articles advantageously can be high-end perfume bottles and other receptacles capable of containing aqueous liquids.

## Description

### FIELD OF THE INVENTION

The present invention broadly relates to glass articles. In particular, the present invention relates to glass articles such as receptacles capable of contacting aqueous liquids, and processes and glass materials for making the same. More particularly, the present invention relates to colored and uncolored borosilicate glass materials capable of being fused to soda-lime glass articles, articles such as receptacles comprising soda-lime glass and the borosilicate glass fused thereto, and method of making such receptacles. The present invention is useful, for example, in making high-end perfume bottles having a soda-lime glass body and outside decorative parts fused thereto comprising borosilicate glass materials.

### BACKGROUND OF THE INVENTION

As is well recognized in the art, soda-lime glass materials have been used widely in the fabrication of various glass objects. Due to their durability in the presence of water and/or moisture, they have been used in the production of receptacles for containing aqueous solutions, such as culinary utensils, perfume bottles, liquor containers, and window glasses. As such, soda-lime glass comprises by far the greatest tonnage of glass melted. The compositions of commercial soda-lime glasses vary somewhat over relatively narrow ranges of individual components, such variations frequently depending upon the batch materials employed. A typical analysis of the sheet glass manufactured through the float glass process is reported below in weight percent, along with several physical properties measured thereon and the predominant crystal phase developed therein upon devitrification thereof:

| | |
|---|---|
| SiO₂ | 77.33 |
| Na₂O | 13.69 |
| K₂O | 0.03 |
| CaO | 8.79 |
| MgO | 3.91 |
| Al₂O₃ | 0.11 |
| SO₃ | 0.15 |
| Fe₂O₃ | 0.087 |
| Softening Point (10^{7.6} poise) (°C) | 727°C |
| Annealing Point (≈ 10¹³ poise) (°C) | 543°C |
| Strain Point (≈ 10^{14.5} poise) (°C) | 504°C |
| Density (g/cm³)(°C) | 2.492 |
| CTE (25-450°C) (°C⁻¹) | 86.2 x 10⁻⁷ |
| Liquidus Temperature (°C) | 992 |
| Crystal Phase | Wollastonite |

To decorate the soda-lime glass articles, especially the high-end perfume bottles, one way contemplated is to fuse a fusable glass having decorative value to the body of the soda-lime glass receptacle. To that end, the fusable glass should have the desired fusability and the coloration. The present inventor has found that the two major factors determining the fusability of such glass to soda-lime glass are matching coefficient of thermal expansion (CTE) and proper softening point. Another concern in choosing the proper fusable glass is its toxicity and environmental friendliness. It is highly desired that the glass is essentially free of toxic heavy metals, such as lead, cadmium, and the like. Manufacture of glasses containing such toxic heavy metals can cause serious environmental and safety problems to the community where the facility is located and to those live and work therein. For receptacles and other glass articles produced for the purpose of storing, dispensing and/or processing foods, beverages, cosmetics (such as perfumes) and other human consumables, being free of lead, cadmium and other highly toxic heavy metals is essential.

Fusable glasses were disclosed in the prior art before, for example, in connection with the ophthalmic products such as the production of bifocal glass lenses, where glasses having differing refractive indices are fused together to form a glass lens with parts having differing refractive indices. United States Patent No. 4,880,453 discloses a glass suitable for use as protective skin glass for soda-lime glass materials. However, it is mentioned in this reference that the glass in issue has low water durability. Indeed, this patent utilizes the low water durability of the glass for its intended use. Moreover, a plurality of the examples of the glass disclosed in this reference contain lead. The colorability of the glass was not disclosed in the reference as well. Therefore, this reference teaches that some of the glass materials disclosed therein would not be suitable for use in producing perfume bottles and liquor containers. One of ordinary skill in the art cannot tell from the limited teachings of this reference whether the non-lead-containing glass would be suitable for use as decorative glass to be fused to containers such as perfume bottles and liquor containers.

Furthermore, in the production of high-end perfume bottles and liquor containers, glasses having red and purple colors are highly desirable for decoration. However, in the prior art, it has been ge-tierally found that glass materials fusable to soda-lime glass having such colors are difficult to obtain without the use of toxic metals such as cadmium and selenium.

Therefore, there remains a genuine need of a glass material capable of being fused to soda-lime glass articles, having the desired CTE, color and colorability, essentially free of toxic heavy metals such as lead and cadmium, and glass articles comprising soda-lime glass and the fusable glass, as well as process for making the same.

Furthermore, for glass materials the normal use thereof involves direct contact with aqueous solutions or moistures, it is highly desirable that such glass has a high water durability.

The present invention satisfies this need.

### SUMMARY OF THE INVENTION

Thus, according to a first aspect of the present invention, provided is a glass article comprising, in whole or in part, of a colored and/or colorable borosilicate glass material essentially free of toxic metals such as lead, cadmium and selenium and Cr (+6) having the following composition, expressed in terms of weight percentages on an oxide/metal basis: 25-60% SiO₂; 5-30% B₂O₃; 5-20% Al₂O₃; 1-5% ZrO₂; 6-15% Li₂O; 0-5% Na₂O; 3-8% K₂O; 0-5% MgO; 0-3% CaO; 0 -20% BaO; 0-10% ZnO; 0-5% TiO₂; 0-10% SnO; 0-5% other reducing agents; 0-5% Fe₂O₃; 0-5% CoO; 0-5% MnO₂; 0-5% Er₂O₃; 0-5% Nd₂O₃; 0-5% Cr₂O₃; 0-5% Other coloring agents; 0-0.5% Au; 0-1% CuO; and having a CTE (0-300°C) of 75-87x10⁻⁷ /°C and a softening point of 550-650 °C.

In certain embodiments of the glass article of the present invention, it comprises the following:
(i) a first part comprising soda-lime glass materials; and
(ii) a second part, fused to the first part, comprising a colored and/or colorable borosilicate glass described generally above and in greater detail below.

Desirably, the article of the present invention is capable of being placed in contact of an aqueous liquid for a prolonged period at room temperature without substantial degradation.

The first part of the glass article of the present invention described above may be the main body of a glass receptacle, for example. The second part may be the handle of a glass receptacle, any inside or outside decoration, the bottom part of a glass article, and the like.

In a preferred embodiment of the glass article of the present invention, the second part comprises colored and/or colorable borosilicate glass material essentially free of lead having the following composition, expressed in terms of weight percentages on an oxide/metal basis: 30-55 % SiO₂; 15-30 % B₂O₃; 6-19 % Al₂O₃; 2-5 % ZrO₂; 6-11 % Li₂O; 0-4 % Na₂O; 3-6 % K₂O; 0-3 % CaO; 0-5 % ZnO; 0-4 % TiO₂; 0-6 % SnO; 0-5 % other reducing agents; 0-5 % Fe₂O₃; 0-5 % CoO; 0-5 % MnO₂; 0-5 % Er₂O₃; 0-5 % Nd₂O₃; 0-5 % Cr₂O₃; 0-5 % other coloring agents; 0-0.5 % Au; and 0-1 % CuO.

For some particularly desired colors, in one of the preferred embodiments of the glass article of the present invention described above, the borosilicate glass of the second part comprises Au in the amount of 0.1-1% and at least one reducing agent in the amount of at least 1 wt%. The reducing agent includes SnO, Sb₂O₃, As₂O₃, other common reducing agents used in glass materials and glass melting processes, and compatible mixtures thereof.

For some other particularly desired colors, in another preferred embodiment of the glass article of the present invention described above, the borosilicate glass of the second part comprise CuO in the amount of 0.1-1% and at least one reducing agent in the amount of at least 1 wt%. The reducing agent includes SnO, Sb₂O₃, As₂O₃, other common reducing agents used in glass materials and glass melting processes, and compatible mixtures thereof.

The glass article of the present invention may be advantageously a receptacle for containing aqueous liquid, such as perfumes, cosmetics and liquors.

In one embodiment of the glass article of the present invention described above, the second part is essentially not placed in contact with the aqueous liquid during normal use thereof.

According to another embodiment of the glass article of the present invention described above, the exposed surface area of the second part is further coated with water-resistant coating.

According to yet another embodiment of the glass article of the present invention described above, at least part of the surface of the second part is coated with water-resistance coating, and such coated surface of the second part is allowed to be placed in directed contact with the aqueous liquid.

According to a second aspect of the present invention, it is provided a process for making any glass article of the present invention summarily described above, comprising the following steps:
(i) providing a first part of the glass article comprising soda-lime glass;
(ii) providing a second part of the glass article comprising the borosilicate glass so defined;
(iii) heating at least part of the first part and at least part of the second part to a fusing temperature higher than the softening temperature of the borosilicate glass, but below the softening temperature of the soda-lime glass; and
(iv) fusing the second part to the first part.

According to one preferred embodiment of the process of the present invention, step (iv) is carried out when the first part of the glass article comprising soda-lime glass is being annealed.

According to another embodiment of the process of the present invention, in step (iv), the second part is fused to the first part in a way such that the second part will not be placed directly in contact with an aqueous liquid during normal use of the glass article.

Another embodiment of the process of the present invention further comprises the following step after step (iv):
(v1) coating at least the surface of the second part to be placed in contact with aqueous liquid with a water-resistant coating.

Another embodiment of the process of the present invention further comprises the following step after step (iv):
(v2) coating all the exposed surface of the second part with a water-resistant coating.

Yet another embodiment of the process of the present invention further comprises the following step after step (iv):
(v3) coating all the exposed surfaces of the first and second parts of the article with a water-resistant coating.

A third aspect of the present invention is a colored and/or colorable borosilicate glass material essentially free of lead having the following composition, expressed in terms of weight percentages on an oxide/metal basis: 25-60% SiO₂; 5-30% B₂O₃; 5-20% Al₂O₃; 1-5% ZrO₂; 6-15% Li₂O; 0-5% Na₂O; 3-8% K₂O; 0-5% MgO; 0-3% CaO; 0 -20% BaO; 0-10% ZnO; 0-5% TiO₂; 0-10% SnO; 0-5% other reducing agents; 0-5% Fe₂O₃; 0-5% CoO; 0-5% MnO₂; 0-5% Er₂O₃; 0-5% Nd₂O₃; 0-5% Cr₂O₃; 0-5% Other coloring agents; 0-0.5% Au; 0-1% CuO; and having a CTE (0-300°C) of 75-87x10⁻⁷ /°C and a softening point of 550-650 °C.

The borosilicate glass of the present invention described above is capable of being fused to a soda-lime glass article at a temperature below the softening point of the soda-lime glass.

According to certain embodiments of the present invention, the borosilicate glass is capable of being placed into direct contact with an aqueous liquid without the need of a water-resistant coating thereon at room temperature for a prolonged period time without substantial degradation.

According to a preferred embodiment of the borosilicate glass of the present invention, it has the following composition, expressed in terms of weight percentages on an oxide or metal basis: 30-55 % SiO₂; 15-30 % B₂O₃; 6-19 % Al₂O₃ 2-5 % ZrO₂; 6-11 % Li₂O; 0-4 % Na₂O; 3-6 % K₂O; 0-3 % CaO; 0-5 % ZnO; 0-4 % TiO₂; 0-6 % SnO; 0-5 % other reducing agents; 0-5 % Fe₂O₃; 0-5 % CoO; 0-5 % MnO₂; 0-5 % Er₂O₃; 0-5 % Nd₂O₃; 0-5 % Cr₂O₃; 0-5 % other coloring agents; 0-0.5 % Au; and 0-1 % CuO.

According to another embodiment of the borosilicate glass of the present invention described above, it comprises Au in the amount of 0.1-1% and at least one reducing agent in the amount of at least 1 wt%.

According to yet another embodiment of the borosilicate glass of the present invention described above, it comprises CuO in the amount of 0.1-1% and at least one reducing agent in the amount of at least 1 wt%.

The borosilicate glass of the present invention has the advantages of being essentially toxic metal (such as lead and cadmium) free, have the desired colorability and/or color, and the fusability to soda-lime glass articles at a temperature below the softening point of soda-lime glass.

The borosilicate glass of the present invention, due to the excellent properties, can be comprised, in whole or in part, of a glass article. Thus, a glass article comprising the borosilicate glass of the present invention, in whole or in part constitutes a fourth aspect of the present invention.

Additional features and advantages of the invention will be set forth in the detailed description which follows, and in part will be readily apparent to those skilled in the art from the description or recognized by practicing the invention as described in the written description and claims hereof.

It is to be understood that the foregoing general description and the following detailed description are merely exemplary of the invention, and are intended to provide an overview or framework to understanding the nature and character of the invention as it is claimed.

### BRIEF DESCRIPTION OF THE DRAWING

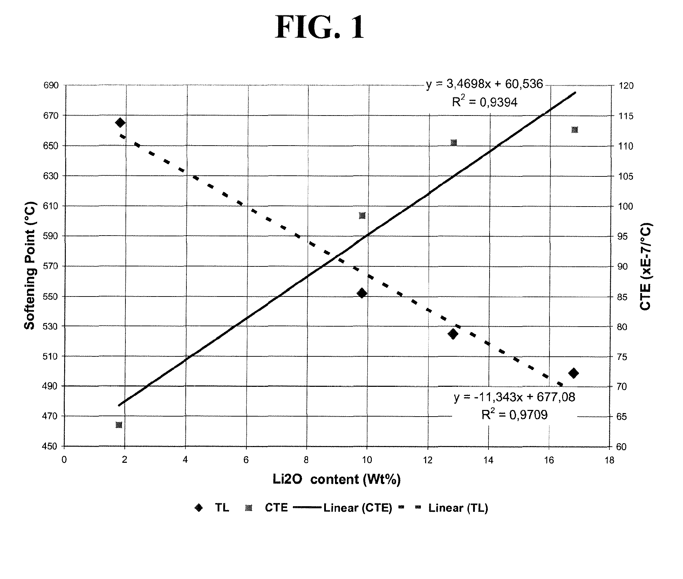

The accompanying drawing, FIG. 1, is a diagram showing the impact of Li₂O amount in a series of borosilicate glasses on the CTE and softening point of the glass.

### DETAILED DESCRIPTION OF THE INVENTION

In the present application, the weight percentages of oxides in a glass composition are those expressed in terms of the identified oxide, and the weight percentages of metal (such as Au) in a glass composition are those expressed in terms of the identified metal(s), regardless of the valencies of the metals in the composition. For example, the amount of Fe in the glass composition is calculated in terms of Fe₂O₃, even though Fe in the glass may be present in Fe²⁺ and Fe³⁺ status. For another example, the amount of Sn in the glass composition is calculated in terms of SnO, even though Sn in the glass may be present in Sn²⁺ and Sn⁴⁺ status. For yet another example, the total amount of Cu in the glass is expressed in terms of CuO, even though the glass may be present in the glass in the form of Cu²⁺, Cu⁺ and Cu⁰.

The present invention relates to glasses which can be easily fused on current soda-lime substrates or body of receptacles such as bottles. They can be used in, inter alia, the perfume industry where design and cosmetic aspects of the packaging is very important. The present invention, though designed for use in connection with soda-lime glass materials, may be used with other glass materials as well, as long as they have similar physical properties compatible with the borosilicate glass of the present invention described summarily above and in detail below. It was mentioned above that the composition and properties of commercially available soda-lime glass vary within a very small range. It is believed that the present invention is applicable for all commercial soda-lime glass compositions. The present invention will be described in the context of bottles, especially perfume bottles, and standard soda-lime glass. The standard "soda-lime glass" as mentioned herein has the following composition and properties:

| | |
|---|---|
| SiO₂ | 73 |
| Na₂O | 14 |
| K₂O | 0.01 |
| CaO | 10.5 |
| MgO | 0.06 |
| Al₂O₃ | 2.3 |
| B₂O₃ | 0.5 |
| Li₂O | 0.05 |
| Softening Point (°C) | 732 |
| CTE (x10⁻⁷/°C) | 86 |

However, one of ordinary skill in the art should understand that the present invention can be applied to other glass articles mutatis mutandis, in addition to soda-lime glass articles.

This invention enables, inter alia, the following:
- sealing additional pieces of colored or colorless glasses to improve the aesthetic appeal of the final bottle receiving the perfume;
- a flexible and wide range of color design of the bottle;
- forming a bottle with arbitrary final shape by fusing two parts with distinct or essentially the same shapes, one being made with standard soda-lime composition, the other with one of the borosilicate glass materials of the present invention. For example, the top of the bottle could be made with the first composition having a first color and the bottom with the second having a differing color. For another example, the inside of the bottle and the outside of bottle may comprise differing compositions, colors and shapes. This enables the realization of complex and appealing bottle designs.
- Forming a bottle with various parts comprising various materials having complex shapes the surface of which can be exposed to aqueous solutions such as most perfume solutions and other cosmetic dispersions as well as moistures present in the air at normal use conditions for a prolonged period time without significant degradation, all without the need of applying water-resistant coatings to the exposed surface.

Fusing two pieces of glasses having differing compositions, colors and/or shapes to make a unitary object have been practiced in the glass art for centuries. For example, glass materials having differing composition and refractive indices are typically fused together to make multifocal lenses in the ophthalmic product industry. The general principles and technique may be utilized in the formation ofperfume bottles with various designs.

However, the perfume bottle market imposes the following requirements on decorative glass (the glass of the second part of the glass article of the present invention as described summarily above) fusable to the soda-lime glass body:
- The CTE of the decorative glass must match that of the soda-lime glass in order to form a strong and durable bonding between the two parts. Soda-lime glass typically has a CTE of about 86-87x10⁻⁷/°C. Consequently, to avoid the facture of the bottle during and after the fusing process, the CTE of the borosilicate glass of the second part of the glass article must be its proximity. The borosilicate glass materials of the present invention have CTE ranging from 75-85x10⁻⁷/°C.
- The borosilicate glass of the second part must be capable of being worked at sufficiently low temperature. Decoration of the perfume bottle is usually conducted after the soda-lime glass body has already been formed. To avoid deformation, such as stretching, sagging, and the like, of the soda-lime glass body, pressing of the borosilicate glass second part to the first part of the glass article must not be done at a temperature higher than the softening temperature of the soda-lime glass (about 730°C). Glasses of the present invention have softening point sufficiently low to be fused, at least, below the softening point of the soda-lime glass. However, preferred borosilicate glasses of the second part of the present invention have softening point in the range 550°C-650°C to be directly processed and fused to the soda-lime glass first part. This enables the fusing of the second part to the soda-lime glass first part during the annealing cycle of the first part.
- The glass of the second part must be non-toxic. The glass industry today faces the challenge of developing compositions which do not include any toxic element such as lead and cadmium. This impact the capacity to generate attractive coloration such as deep red. In the prior art, deep red in glasses are generated typically by addition of large amounts and/ or cadmium in the glass, which are toxic. Glasses of the present invention are lead free. Red coloration can be generated by using a composition including high content of boron and enabling the copper precipitation during the fusing cycle. Beautiful purple colors can be generated by adding Au as the coloring agent. Of course, a large range of color could be generated by adding traditional coloring agents such as cobalt (blue), manganese (brown), iron (green) or even black... The list above is not limitative. And
- Desirably, the fused glass and the soda-lime glass both have good water durability to enable the glass bottles formed to be capable of direct contact with aqueous solutions, dispersions and moisture for a prolonged period of time under normal use conditions without significant degradation.

The present inventors have previously developed BaO-B₂O₃-containing glass materials capable of fusing to soda lime glass at a relatively low temperature without deforming the soda-lime glass bottle body. However, such glass materials typically comprise a low amount of silica and a high amount of B₂O₃. This has caused a low water durability of such glasses. For glass containers comprising such BaO-B₂O₃-containing glass materials to be used in direct contact with aqueous solutions and dispersions, it is typically required a water-resistant coating to be applied to the surface of the BaO-B₂O₃ exposed to the solutions and/or moistures.

The ranges of borosilicate glass compositions indicated above are determined by practical glass-making considerations and their effects on physical properties such as coefficient of thermal expansion and softening point.

FIG. 1 is a diagram showing the impact of Li₂O amount in a borosilicate glass on the CTE and softening point thereof. One of the glasses shown in this diagram has the following compositions: 57.1% SiO₂; 17.9% B₂O₃; 6.2% Al₂O₃ 5% ZrO₂; 1.8% Li₂O; 3.9% Na₂O; 5.8% K₂O; and 2.3% TiO₂; and a CTE of about 63.5x10⁻⁷/°C and a softening point of about 665°C.

In this figure, "TL" means softening point of the glass; "CTE" means the coefficient of thermal expansion at room temperature in terms of x10⁻⁷/°C; "Linear (TL)" means the linear fit curve of the softening point of the glass, and "Linear (CTE)" means the linear fit curve of the CTE of the glass. Interpolation of glass property data of available glass compositions clearly shows that targeted properties could be achieved similar glass with Li₂O content ranging from 6 to 10wt%. For example, glass corresponding to an amount of lithium oxide of 7wt% would have a thermal expansion of about 85x10⁻⁷ /°C and a softening point of about 595°C.

The borosilicate glass materials of the present invention can be melted by using conventional glass melting techniques. The borosilicate glass can be molded into the second part of the glass article of the present invention having any desired shape using conventional glass forming techniques before fusing to the first part of the glass article of the present invention. As is typically used in glass melting, conventional fining agents may be used when melting the borosilicate glass of the present invention in preparing the first part of the glass article of the present invention. Particularly, fining agents such as SnO₂, Sb₂O₃, As₂O₃ may be used. Due to toxicity, As₂O₃ and Sb₂O₃ should be generally avoided. SnO₂ is the preferred fining agents. As is typically known to one of ordinary skill in the art, when the glass melt is fined, SnO₂, Sb₂O₅ and As₂O₅ are reduced to SnO, Sb₂O₃ and As₂O₃. These oxides at reduced valencies may function as reducing agents mentioned above and below to reduce Au³⁺ and Cu²⁺ into metal Au⁰ and Cu⁰, thus causing desired colors in the glass.

It is highly desired that toxic elements are excluded from the composition of the borosilicate glass of the present invention when used in the glass article of the present invention for reasons described above. This is especially the case for lead oxide. In the case of chromium oxide, however, Cr₂O₃ may be use as a colorant to avoid any problem of toxicity during the preparation.

Boric oxide must be included in the composition for adjustment of the physical properties such as softening point. It is also believed that B₂O₃ also functions to promote the precipitation of metal colloids in the glass where metal colloids (such as Au, Cu, and the like) are desired.

Though metal colloids (such as Au⁰, Cu⁰, and the like) may be formed in the borosilicate glass during melting and/or fusing, such metals are usually introduced into the glass batch at a higher valency. For example, in order to obtain a homogeneous distribution of Au in the glass, AuCl₃·HCl·H₂O (hydrochloroauric acid) may be used as the raw material for Au. CuO may be used as the starting material of Cu. In such cases where the metal are introduced into the raw material at an oxidized state, it is highly desired that sufficient amount of reducing agents, such as SnO₂, SnO, Sn, AS₂O₃, Sb₂O₃, charcoal, and the like, are added into the batch material, so that the metals are reduced into metallic state to form metal colloids in the glass, which are responsible for generating the desired coloration in the glass after melting or fusing. The present inventor has found that this method is an elegant way to generate deep red/purple coloration without using toxic element such as cadmium or selenium in the glass. Examples of the borosilicate glass materials of the present invention presented below illustrate the generation of desired red/purple coloration by using Au or Cu.

The present inventor has found that the water durability of the borosilicate glass can be adjusted by adding zirconium oxide into the batch. Improvement in weathering can be achieved by increasing the content of tin oxide. Addition of small quantities of alkaline earth metal oxides, zinc, heavy metal or titanium oxides in addition to other basic glass modifications is not strictly prohibited as long as the amounts thereof do not materially alter the CTE, softening point and toxicity.

It is also contemplated by the present inventor that in order to improve the durability of the article of the present invention, particular the durability of the second party, water-resistant coating may be applied to at least part of the surface of the glass article, desirably at least over the area which are to be placed in direct contact with aqueous liquids. It may be desired and convenient to apply a water-resistant coating over the whole outer and inner surface of the glass article that may be exposed to either liquid water or moisture. It may be particularly desired to apply a water-resistant coating over the exposed surface of the second part of the glass article of the present invention. Such water resistant coating includes, but are not limited to, thin film coatings formed by sol-gel process known to one or ordinary skill in the art, such as the anti-fog coating formed on the surface of ophthalmic lenses, or by chemical vapor deposition such as those inorganic coatings formed on the surfaces of ophthalmic lenses, or by laminating a polymer film thereto. Such polymer films may be formed in situ on the surfaces by polymerization of monomers thereof, or pre-fabricated and laminated by various means known in the prior art to one of ordinary skill in the art.

Another advantage of the borosilicate glass material of the present invention is that it is generally colorable or already colored when various coloring agents are included therein. Au and Cu were described as two particularly preferred and desired coloring agents. Other coloring agents may be used where necessary and desirable. Preferred other coloring agents include oxides of cobalt, manganese, nickel, erbium, neodymium, chromium (III) and iron to cover the basic color used for decoration.

The present inventor also found that in order to obtain desired color in Cu-containing borosilicate glass of the present invention, the glass must be heat treated to induce copper halides precipitation and/or to be sealed to the substrate. To avoid cracking when the second part is fused to the first part, it is highly desired that the two parts are heated to essentially the same temperature before they are allowed to contact with each other and to fuse together. Typical heat treatment ranges from about 580 to 650°C but can be changed to suit the needs of the particular glasses used. However, to avoid deformation of the first part, it is preferred that the heat treatment temperature is limited to under 640°C. It may also be desired that during and/or after the fusing operation, temperature of the two fused parts is held for a period of about 1 hour. In certain situations shorter cycle of holding may be desired in order to maintain the integrity of the fusion and bonding.

Previously, the present inventors have developed BaO-B₂O₃-containing glasses that have the capability of fusing to standard soda-lime glass bottles without significantly deforming the body of such glass bodies. Those BaO-B₂O₃-containing glasses had the desired colorability or color when coloring agents is added. However, there is concerns about the water durability of such glass after prolonged exposure to water at around room temperature.

TABLE I below lists the composition and properties of a series of exemplary colorless B₂O₃-BaO-containing glass materials the present inventor previously developed for use in the glass article of the present invention, as well as certain comparative examples. TABLE II below lists a series of exemplary colored B₂O₃-BaO-containing glass for use in the glass article, as well as certain comparative examples. TABLE III lists a series of B₂O₃-BaO-containing glass material by precipitating metallic colloids therein. Compositions listed in the tables are expressed in terms of weight percentages on an oxide/metal basis.

TABLE IV below lists the composition and properties of a series of exemplary colorless borosilicate glass materials of the present invention for use in the glass article of the present invention, as well as certain comparative examples. Compositions listed in the table are expressed in terms of weight percentages on an oxide/metal basis.

**TABLE I**

| Oxides | 1 | 2 | 3 | 4 | 5 | 6 | 7 | 8 | 9 |
|---|---|---|---|---|---|---|---|---|---|
| SiO₂ | 4.10 | 4.1 | 8.10 | 6.10 | 2.10 | 2.10 | 9.1 | 4.10 | 0.10 |
| B₂O₃ | 47.50 | 47.5 | 43.50 | 43.50 | 47.50 | 47.50 | 40.5 | 43.5 | 47.50 |
| Al₂O₃ | 2.40 | 2.40 | 2.40 | 2.40 | 2.40 | 2.40 | 2.40 | 2.40 | 2.40 |
| Li₂O | 2.50 | 2.50 | 2.50 | 2.50 | 4.50 | 2.50 | 3.50 | 4.50 | 4.50 |
| BaO | 43.50 | 38.5 | 43.50 | 45.50 | 43.50 | 45.50 | 44.6 | 45.50 | 45.50 |
| SnO | - | 5 | - | - | - | - | - | - | - |
| | | | | | | | | | |
| Li₂O+BaO | 46 | 41 | 46 | 48 | 48 | 48 | 48.1 | 50 | 50 |
| Sealing ability | Yes | Yes | Yes | Yes | Yes | Yes | No* | No | No |
| Color | Colorless | Colorless | Colorless | Colorless | Colorless | Colorless | Colorless | Colorless | Colorless |
| CTE(x10⁻⁷/°C) | 78.8 | 76.9 | 80.1 | 81.2 | 81.3 | 86.3 | 89.0 | 89.6 | 91.8 |
| Softening Point (°C) | 612 | 627 | 620 | 613 | 605 | 580 | 602 | 578 | 573 |

| | | | | | | | | | |
|---|---|---|---|---|---|---|---|---|---|
| * The substrate fractured. | | | | | | | | | |

**TABLE II**

| Example No. | 10 | 11 | 12 | 13 | 14 | 15 | 16 | 17 |
|---|---|---|---|---|---|---|---|---|
| SiO₂ | 0.10 | 2.10 | 2.10 | 2.10 | 3.30 | 0.10 | 3.30 | 1.10 |
| B₂O₃ | 47.50 | 47.50 | 47.50 | 47.50 | 47.50 | 47.50 | 47.50 | 47.50 |
| Al₂O₃ | 2.40 | 2.40 | 2.40 | 2.40 | 2.40 | 2.40 | 2.40 | 2.40 |
| Li₂O | 4.50 | 2.50 | 2.50 | 2.50 | 2.50 | 2.50 | 2.50 | 2.50 |
| BaO | 43.50 | 43.50 | 43.50 | 43.50 | 43.50 | 43.50 | 43.50 | 43.50 |
| SnO | - | - | - | - | - | - | - | - |
| MnO₂ | 2 | - | - | - | - | - | - | - |
| Fe₂O₃ | - | 2 | - | - | - | - | - | - |
| Cr₂O₃ | - | - | 2 | - | - | - | - | 2 |
| Er₂O₃ | - | - | - | 2 | - | - | - | - |
| CoO | - | - | - | - | 0.80 | - | 0.7 | 1 |
| Nd₂O₃ | - | - | - | - | - | 4 | 0.1 | - |
| CuO | - | - | - | - | - | - | - | - |
| | | | | | | | | |
| Li₂O + BaO | 48 | 46 | 46 | 46 | 46 | 46 | 46 | 46 |
| Sealing ability | Yes | Yes | Yes | Yes | Yes | Yes | Yes | Yes |
| | | | | | | | | |
| Color | Brown | Green | Green | Pink | Deep blue | Blue/pink | Deep blue | Black |
| T% (C-3mm) | | | 0.2 | | 0.1 | | | 0.0 |
| .x | | | 0.1659 | | 0.1735 | | | 0.4981 |
| .y | | | 0.7535 | | 0.0141 | | | 0.3614 |
| | | | | | | | | |
| CTE (x10⁻⁷/°C) | - | 79.6 | 82.4 | 82.1 | 79.9 | 85.0 | 83.0 | - |
| Softening Point (°C) | 574 | 605 | 618 | 611 | 607 | 608 | - | 615 |
| | | | | | | | | |

**TABELE III**

| Example No. | 18 | 19 | 20 | 21 | 22 | 23 | 24 |
|---|---|---|---|---|---|---|---|
| SiO₂ | 1.80 | 1.20 | 2.44 | 3.94 | 3.94 | 0.94 | 0.78 |
| B₂O₃ | 47.50 | 47.50 | 47.50 | 47.50 | 47.50 | 47.50 | 47.50 |
| Al₂O₃ | 2.40 | 2.40 | 2.40 | 2.40 | 2.40 | 2.40 | 2.40 |
| Li₂O | 4.50 | 4.50 | 2.50 | 2.50 | 2.50 | 2.50 | 2.50 |
| BaO | 43.50 | 43.50 | 43.50 | 43.50 | 43.50 | 43.50 | 43.50 |
| SnO | 0.20 | 0.60 | 1.50 | 5 | - | 3 | 3 |
| CuO | 0.10 | 0.30 | 0.16 | 0.16 | - | - | - |
| Au | - | - | - | - | 0.16 | 0.16 | 0.32 |
| | | | | | | | |
| Li₂O+BaO | 48 | 48 | 46 | 41 | 46 | 46 | 46 |
| Sealing ability | Yes | Yes | Yes | Yes | Yes | Yes | Yes |
| | | | | | | | |
| Color after melting | Light blue | Light blue | Colorless | Colorless | Colorless | Purple | Deep purple |
| Color after fusing | Light blue | Light blue | Reddish | Red | Colorless | Purple | Deep purple |
| | | | | | | | |
| CTE (x10⁻⁷°C) | - | - | - | 77.8 | - | - | - |
| Softening Point (°C) | 583 | 575 | 611 | - | - | - | - |
| | | | | | | | |

**TABLE IV**

| **Examples** | **Comparative Examples** | | | | | | **Inventive Examples** | |
|---|---|---|---|---|---|---|---|---|
| **Oxides** | **A** | **B** | **C** | **D** | **E** | | **F** | **G** |
| SiO₂ | 57.1 | 49.1 | 46.1 | 46.1 | 41.3 | | 51.9 | 34.1 |
| B₂O₃ | 17.9 | 17.9 | 17.9 | 17.9 | 27.1 | | 17.9 | 27.1 |
| Al₂O₃ | 6.2 | 6.2 | 6.2 | 6.2 | 18.5 | | 6.2 | 18.5 |
| ZrO₂ | 5 | 5 | 5 | 5 | 2.5 | | 5 | 2.5 |
| Li₂O | 1.8 | 9.8 | 12.8 | 16.8 | 2.55 | | 7 | 10.75 |
| Na₂O | 3.9 | 3.9 | 3.9 | 3.9 | 0.85 | | 3.9 | 0.85 |
| K₂O | 5.8 | 5.8 | 5.8 | 5.8 | 3.4 | | 5.8 | 3.4 |
| TiO₂ | 2.3 | 2.3 | 2.3 | 2.3 | 0 | | 2.3 | 0 |
| CaO | - | - | | | 2.8 | | - | 2.8 |
| | | | | | | | | |
| | | | | | | | | |
| Sealing ability | No | No | No | No | No | | Probable | Probable |
| | | | | | | | | |
| CTE (x10⁻⁷/°C) | 63.5 | 98.4 | 110.5 | 112.7 | 56 | | ≈ 85 | ≈ 85 |
| Softening Point (°C) | 665 | 552 | 525 | 499 | 689 | | ≈ 595 | ≈ 600 |
| | | | | | | | | |

Glasses (1) to (6) are typical examples of colorless glasses developed previously. All of these examples have CTE lower than 87x10⁻⁷ /°C and sum of Li₂O and BaO lower than 48. On the contrary, Example No. 7 in TABLE I of the present application has the same composition of example 8 of TABLE I of United States Patent No. 4,880,453. As is shown in TABLE I of the present application, the Example No. 7 when being fused to the soda-lime glass body, caused the soda-lime glass body to fracture, which is highly undesirable. This could be due to unexpected higher thermal expansion coefficient of that reported and/or to higher thickness of the piece to be fused.

Glasses of Example Nos. (10) to (17) are examples of color BaO-B₂O₃-containing glass for use in multiple-part glass articles. In these glasses, the coloration is obtained by addition of coloring agents. The list of achievable colors and coloring elements is not limitative. As the examples show, brown, green, pink, blue can be obtained by introducing respectively manganese, iron or chromium, erbium oxides without penalties on the physical properties. Example Nos. (16) and (17) include a mixture of coloring agents. Example No. (17) illustrates the ability to obtain a black coloration which is desired for decoration.

TABLE III shows the ability of obtain red/ purple coloration by precipitation of metal colloids in the BaO-B₂O₃-containing glasses. Example Nos. (18) to (21) are relative to copper precipitation and examples (22) to (24) to gold addition. Color can be obtained directly during the melting/forming process or during a subsequent heat treatment compatible with the fusing process. The composition generally needs to include an element which can generate metallic aggregates such as copper or gold; if copper and gold are added in their oxidized state, reducing agent in sufficient amounts should be introduced into the batch material as well. As mentioned above, such reducing agents are generally included at an amount of at least 1% in total.

In Example Nos. (18), (19) and (22), no reducing agents are added into the glass batch even though CuO are added as coloring agents. As can be seen from TABLE III, no red or purple color was generated in these glasses, indicating that Cu metal colloids did not form due to the lack of reducing agents. Example Nos. (18) and (19) exhibit an appealing light blue color. The fact that the glass of Example No. (22) remains colorless after heat treatment indicates that gold alone, when added in oxidized state, cannot be used to precipitate colloids in the glass without the use of proper amount of reducing agent.

Example No. (20) comprises copper. The glass of this example is colorless after melting but prior to further heat treatment. Upon further heat treatment, the glass turned red. This illustrates for certain Cu-containing BaO-B₂O₃- containing glasses, red coloration can be generated during the fusing cycle of the second part to the first part of the glass article of the present invention. It is also possible to use this glass to produce glass article part of which is colorless and the other part is red simply by selectively heating part of the second part or the whole second part of the glass article.

Example Nos. (23) and (24) comprise gold. They are colored after melting. Further heat treatment does not alter the color of the glasses significantly. Due to the appeal of the color, they can be advantageously used as the second part of a two-part or multiple-part glass article.

Glass examples A-E in TABLE IV are comparative examples. They are borosilicate glass compositions known to the present inventors that would not fused properly to standard soda-lime glass bottles. However, according to the expertise of the present inventor, it is highly probably that the compositions of Examples F and G would have the desired properties and should be capable of fusing to standard soda-lime glass bottles successfully due to the anticipated softening point and CTE.

It is also expected that the glass of examples F and G would have the desired water resistant properties due to the high amount of SiO₂ and low amount of B₂O₃ in the compositions. It is expected that the examples F and G would have better water durability than a host of BaO-B₂O₃ -containing glasses described above.

It is also expected that the glass examples F and G, and similar glasses, would have the desired colorability, or can be formulated into colored glasses when coloring agents are added into the melting batch, or upon proper heat treatment of a non-colored glass containing the proper coloring agents, similar to the BaO-B₂O₃-containing glasses previously developed and described and illustrated supra.

As mentioned in general supra, a glass article comprising the borosilicate glass of the present invention, in whole or in part, constitutes part of the prevention. The multiple-part glass article as described supra is preferred embodiment of the glass article comprising the borosilicate glass of the present invention. As generally described above, the multiple-part glass article of the present invention, comprises "a first part comprising soda-lime glass material" and "a second part comprising borosilicate glass." This means that the article may comprise one or more part comprising soda-lime glass, and one or more part comprising the borosilicate glass of the present invention. It is also to be noted that the article of the present invention may comprise various parts made of borosilicate glass materials of the present invention with differing compositions and/or colors and/or CTEs and/or softening points. It is also to be noted that the article of the present invention may comprise various parts made of soda-lime glasses having differing compositions and/or colors and/or CTEs and/or softening points. However, in general, they should typically have the properties described above.

It will be apparent to those skilled in the art that various modifications and alterations can be made to the present invention without departing from the scope and spirit of the invention. Thus, it is intended that the present invention cover the modifications and variations of this invention provided they come within the scope of the appended claims and their equivalents.

## Claims

1. A glass article comprising, in whole or in part, a colored and/or colorable borosilicate glass material essentially free of lead having a composition comprising, expressed in terms of weight percentages on an oxide/metal basis:
| Oxide/Metal | Wt% |
|---|---|
| SiO₂ | 25-60 |
| B₂O₃ | 5-30 |
| Al₂O₃ | 5-20 |
| ZrO₂ | 1-5 |
| Li₂O | 6-15 |
| Na₂O | 0-5 |
| K₂O | 3-8 |
| MgO | 0-5 |
| CaO | 0-3 |
| BaO | 0-20 |
| ZnO | 0-10 |
| TiO₂ | 0-5 |
| SnO | 0-10 |
| Other reducing agents | 0-5 |
| Fe₂O₃ | 0-5 |
| CoO | 0-5 |
| MnO₂ | 0-5 |
| Er₂O₃ | 0-5 |
| Nd₂O₃ | 0-5 |
| Cr₂O₃ | 0-5 |
| Other coloring agents | 0-5 |
| Au | 0-0.5 |
| CuO | 0-1 |
and having the following properties:
| | |
|---|---|
| CTE (0-300°C): | 75-87x10⁻⁷ /°C |
| Softening point: | 550-650 °C. |

2. A glass article according to claim 1 comprising the following:
(i) a first part comprising soda-lime glass material; and
(ii) a second part, fused to the first part, comprising the borosilicate glass material described in claim 1.

3. A glass article according to claim 1 or claim 2, wherein the second part comprises colored and/or colorable borosilicate glass material essentially free of lead having the following composition, expressed in terms of weight percentages on an oxide/metal basis:
| Oxide/Metal | Wt% |
|---|---|
| SiO₂ | 30-55 |
| B₂O₃ | 15-30 |
| Al₂O₃ | 6-19 |
| ZrO₂ | 2-5 |
| Li₂O | 6-11 |
| Na₂O | 0-4 |
| K₂O | 3-6 |
| MgO | Essentially free |
| CaO | 0-3 |
| BaO | Essentially free |
| ZnO | 0-5 |
| TiO₂ | 0-4 |
| SnO | 0-6 |
| Other reducing agents | 0-5 |
| Fe₂O₃ | 0-5 |
| CoO | 0-5 |
| MnO₂ | 0-5 |
| Er₂O₃ | 0-5 |
| Nd₂O₃ | 0-5 |
| Cr₂O₃ | 0-5 |
| Other coloring agents | 0-5 |
| Au | 0-0.5 |
| CuO | 0-1 |

4. A glass article according to any one of the above claims, wherein the borosilicate glass of the second part comprise Au in the amount of 0.1-1% and at least one reducing agent in the amount of at least 1 wt%.

5. A glass article according to any one of the preceding claims, wherein the borosilicate glass of the second part comprise CuO in the amount of 0.1-1% and at least one reducing agent in the amount of at least 1 wt%.

6. A glass article according to any one of the preceding claims which is a receptacle for containing an aqueous liquid.

7. A glass article according to any one of the preceding claims, wherein the second part is essentially not placed in contact with the aqueous liquid during normal use thereof.

8. A glass article according to any one of the preceding claims, wherein the exposed surface area of the second part is further coated with water-resistant coating.

9. A glass article according to any one of claims 1 to 6, wherein at least part of the surface of the second part is coated with water-resistance coating, and such coated surface of the second part is allowed to be placed in directed contact with the aqueous liquid during normal use thereof.

10. A process for making a glass article according to any one of the preceding claims, comprising the following steps:
(i) providing a first part of the glass article comprising soda-lime glass;
(ii) providing a second part of the glass article comprising the borosilicate glass so defined;
(iii) heating at least part of the first part and at least part of the second part to a fusing temperature higher than the softening temperature of the borosilicate glass, but below the softening temperature of the soda-lime glass; and
(iv) fusing the second part to the first part.

11. A process according to claim 10, wherein step (iv) is carried out when the first part provided in step (i) is being annealed.

12. A process according to claim 10, wherein in step (iv), the second part is fused to the first part in a way such that the second part will not be placed directly in contact with an aqueous liquid during normal use of the glass article.

13. A process according to claim 10, further comprising the following step after step (iv):
(v1) coating at least the surface of the second part to be placed in contact with aqueous liquid with a water-resistant coating.

14. A process according to claim 10 or claim 11, further comprising the following step after step (iv):
(v2) coating all the exposed surface of the second part with a water-resistant coating.

15. A process according to claim 10 or claim 11, further comprising the following step after step (iv):
(v3) coating all the exposed surfaces of the first and second parts of the article with a water-resistant coating.

16. A colored and/or colorable borosilicate glass material essentially free of lead having the following composition, expressed in terms of weight percentages on an oxide/metal basis:
| Oxide/Metal | Wt% |
|---|---|
| SiO₂ | 25-60 |
| B₂O₃ | 5-30 |
| Al₂O₃ | 5-20 |
| ZrO₂ | 1-5 |
| Li₂O | 6-15 |
| Na₂O | 0-5 |
| K₂O | 3-8 |
| MgO | 0-5 |
| CaO | 0-3 |
| BaO | 0-20 |
| ZnO | 0-10 |
| TiO₂ | 0 5 |
| SnO | 0-10 |
| Other reducing agents | 0-5 |
| Fe₂O₃ | 0-5 |
| CoO | 0-5 |
| MnO₂ | 0-5 |
| Er₂O₃ | 0-5 |
| Nd₂O₃ | 0-5 |
| Cr₂O₃ | 0-5 |
| Other coloring agents | 0-5 |
| Au | 0-0.5 |
| CuO | 0-1 |
and having the following properties:
| | |
|---|---|
| CTE (0-300°C): | 75-87x10⁻⁷ /°C |
| Softening point: | 550-650 °C. |

17. A glass material according to claim 16 having the following composition, expressed in terms of weight percentages on an oxide/metal basis:
| Oxide/Metal | Wt% |
|---|---|
| SiO₂ | 30-55 |
| B₂O₃ | 15-30 |
| Al₂O₃ | 6-19 |
| ZrO₂ | 2-5 |
| Li₂O | 6-11 |
| Na₂O | 0-4 |
| K₂O | 3-6 |
| MgO | Essentially free |
| CaO | 0-3 |
| BaO | Essentially free |
| ZnO | 0-5 |
| TiO₂ | 0-4 |
| SnO | 0-6 |
| Other reducing agents | 0-5 |
| Fe₂O₃ | 0-5 |
| CoO | 0-5 |
| Mn0₂ | 0-5 |
| Er₂O₃ | 0-5 |
| Nd₂O₃ | 0-5 |
| Cr₂O₃ | 0-5 |
| Other coloring agents | 0-5 |
| Au | 0-0.5 |
| CuO | 0-1 |

18. A glass material according to claim 16 or claim 17 comprising Au in the amount of 0.1-1% and at least one reducing agent in the amount of at least 1wt%.

19. A glass material according to any one of claims 16 to 18 comprising CuO in the amount of 0.1-1% and at least one reducing agent in the amount of at least 1wt%.
